# EUROPÄISCHE PATENTSCHRIFT

(11) **EP 2 059 690 B1**
(45) Veröffentlichungstag und Bekanntmachung des Hinweises auf die Patenterteilung: **10.10.2012**
(21) Anmeldenummer: 07788128.2
(22) Anmeldetag: 01.08.2007
(51) Int. Cl.: F16D 23/14

(54) **KUPPLUNGSAUSRÜCKLAGER MIT ANLAUFSCHEIBE**
CLUTCH RELEASE BEARING HAVING A STOP DISK
BUTÉE DE DÉBRAYAGE POURVUE D'UNE RONDELLE DE BUTÉE

(30) Priorität: 29.08.2006 DE 102006040463
(43) Veröffentlichungstag der Anmeldung: 20.05.2009
(73) Patentinhaber: Schaeffler Technologies AG & Co. KG, 91074 Herzogenaurach (DE)
(72) Erfinder: DITTMER, Steffen, 91086 Aurachtal (DE); WINKELMANN, Ludwig, 91056 Erlangen (DE)
(86) Internationale Anmeldenummer: PCT/EP2007/057959
(87) Internationale Veröffentlichungsnummer: WO 2008/025633

(56) Entgegenhaltungen:
- EP-A- 1 647 731
- DE-A1- 10 125 691
- DE-A1-102004 016 190
- GB-A- 2 171 447

## Beschreibung

### Gebiet der Erfindung

Die Erfindung betrifft ein Kupplungsausrücklager mit einem nicht umlaufenden Außenring und mit einem umlaufenden Innenring, wobei der Außenring und der Innenring Laufbahnen für Wälzkörper aufweisen, das Ausrücklager weiter mit einer im Längsschnitt L-förmig gestalteten Anlaufscheibe für den Anlauf wenigstens einer Kupplungsfeder, wobei die Anlaufscheibe einen ersten Schenkel aufweist, der sich axial an einem Flansch abstützt und wobei die Anlaufscheibe einen im Winkel von dem ersten Schenkel abgehenden zweiten Schenkel aufweist, der axial in eine zentrale Durchgangsöffnung des Flansches eintaucht und dabei innenumfangsseitig der Durchgangsöffnung radial anliegt.

### Hintergrund der Erfindung

Ein derartiges Kupplungsausrücklager ist in DE 101 25 691 A1 beschrieben. Die Anlaufscheibe ist aus Kunststoff und zum Beispiel durch Aufspritzen der Anlaufscheibe als Schicht auf dem Flansch befestigt. Die Herstellung derartiger Verbindungen ist relativ aufwändig, da das Bauteil aus Metall mit dem Flansch in eine Form eines Spritzgießwerkzeuges eingelegt werden muss und dann umspritzt wird.

DE 10 2004 016190 A1, vgl. oberbegriff des Anspruchs 1 der vorliegenden Erfindung, zeigt ein Kupplungsausrücklager mit einem nicht umlaufenden Außenring und mit einem umlaufenden Innenring, das auch mit einer im Längsschnitt L-förmig gestalteten Anlaufscheibe für den Anlauf von Kupplungsfederenden aufweist. Einer der Schenkel der Anlaufscheibe taucht axial in eine zentrale Durchgangsöffnung des Flansches ein und liegt dabei innenumfangsseitig der Durchgangsöffnung radial an. Die Oberfläche der Durchgangsöffnung des Innen rings weist innen radiale Abweichungen auf, die zwecks axialer Sicherung der Anlaufscheibe am Innenring mit radialen Abweichungen an dem Schenkel der Anlaufscheibe formschlüssig korrespondieren,

Damit wird ein Kupplungsausrücklager geschaffen, mit dem der zuvor genannte Nachteil vermieden wird.

### Zusammenfassung der Erfindung

Mit dem kennzeichnenden Teils des Anspruchs 1 wird folgendes erwecht:
Zumindest ein Teil der radialen Abweichungen ist umfangsseitig begrenzt. Dadurch ist wenigstens zwischen den umfangsseitig begrenzten Abweichungen der Anlaufscheibe und dem Flansch in der Durchgangsöffnung eine um die Rotationsachse des Kupplungsausrücklagers verdrehsichere formschlüssige Verbindung zwischen dem zweiten Schenkel und dem Flansch ausgebildet ist.

Die Anlaufscheibe und der Flansch sind nicht nur axial aneinander sondern auch gegen relatives Verdrehen zueinander um die Rotationsachseaneinander gesichert. Dazu sind die ersten radialen Abweichungen, d.h. Vorsprünge, seitlich in Umfangsrichtung durch tangential oder in Umfangsrichtung gerichtete Flanken begrenzt. Jeder der Flanken liegt eine Flanke eines Verdrehanschlags gegenüber oder liegt an dieser im Formschluss direkt an. Die Verdrehanschläge stehen aus dem Grund der Umfangsnut radial nach außen hervor. Jeder der Flanken liegt beispielsweise eine Flanke gegenüber, die durch die in Umfangsrichtung gewandte Innenkanten des Fensters gebildet sind

Seitlich, d.h. in Umfangsrichtung hervorstehende Nasen, Nocken, Rippen oder andere der Formschlusselemente sind Hilfen für gerichtete Montage und bilden Verdrehsicherungen der Anlaufscheibe an dem jeweiligen Ring, ohne das der Flansch geschwächt ist.

Wenn die ersten radialen Abweichungen ein oder mehrere radiale Vorsprünge sind, ragen diese in die Durchgangsöffnung hinein. Wenn die ersten radialen Abweichungen ein oder mehrere radiale Vertiefungen in der Oberfläche der Öffnung sind, bilden diese Hinterschnitte für Formschluss, in die entsprechende radiale Vorsprünge des zweiten Schenkels eingreifen. Wenn die radialen Abweichungen an dem zweiten Schenkel ein oder mehrere radiale Vorsprünge sind, ragen diese radial nach außengerichtet aus der Oberfläche des jeweiligen Abschnitts am zweiten Schenkel heraus. Wenn die radialen Abweichungen an dem Schenkel ein oder mehrere Vertiefungen sind, sind diese Hinterschnitte für den Formschluss mit entsprechenden radiale Vorsprüngen in der Durchgangsöffnung.

Die radialen Vorsprünge in der Durchgangsöffnung sind beispielsweise einzelne nasenartige Materialanhäufungen von plastisch aus den Randzonen der Durchgangöffnung verdrängtem Material oder sind Ringwulste bzw. Rippen. Das Material ist zum Beispiel spanlos durch Kaltumformen wie durch axiales Prägen oder durch Rollieren oder spanabhebend als radialer Wulst, als Stufe oder anders durch Drehen und Schleifen erzeugt. Mehrere radiale Vorsprünge sind z.B. in der Durchgangsöffnung umfangsseitig direkt zueinander benachbarte oder axial zueinander versetzte Vorsprünge bzw. Vertiefungen. Denkbar ist auch, dass in der Durchgangsöffnung radiale Vorsprünge und Vertiefungen zueinander benachbart sind. Die radialen Vertiefungen sind beispielsweise einzelne Kavitäten wie Ringnuten, Längsnuten oder radiale Sacklöcher, die an den Stellen nach dem plastischen Verdrängen durch Prägen oder Rollieren von Material entstanden sind.

Die radialen Vorsprünge an dem zweiten Schenkel sind einzelne nasenartige Vorsprünge, Schnappnasen oder Ringwulste eines umfangsseitig geschlossenen oder geschlitzten Schenkels. Die radialen Vertiefungen sind Längsnuten oder Längsschlitze.

Der Formschluss ist im wesentlichen in der Durchgangsöffnung eines Flansches eines Innenrings des Kupplungsausrücklagers oder in der Durchgangsöffnung eines Einstellrings eines Kupplungsausrücklagers. Mit dem Einstellring werden Fehler der Koaxialität zwischen Kupplungsachse und Getriebewelle ausgeglichen. Die Ringe sind vorzugsweise Kaltumformteile aus Blech, an die der Flansch einteilig angeformt ist. Die radialen Abweichungen in der Durchgangsöffnung werden insbesondere beim Formen der Ringe mit eingebracht, sind deshalb mit hoher Präzision ausgeführt und verursachen keine zusätzlichen Kosten.

Die Durchgangsöffnung ist eine zentrale Öffnung, in die die Anlaufscheibe mittels des zweiten Schenkels eingeschnappt oder in der diese formschlüssig durch kalibrieren gesichert wird und in die die Getriebewelle eintaucht. Axialer Bauraum für die Verbindung wird nicht benötigt, da die Verbindung in der Durchgangsöffnung angeordnet ist. Die Montage der beiden Bauelemente miteinander ist einfach. Die Werkzeugkosten sind gering. Die Durchgangsöffnung ist in axialer Richtung insbesondere dann breit genug, wenn die Durchgangsöffnung an einer Doppelung des Blechs ausgeführt ist. Die Doppelung des Blechs verstärkt ursächlich den Übergang vom Flansch zum rohrförmigen Abschnitt.

Werkstoff der Anlaufscheibe ist thermoplastischer Kunststoff, vorzugsweise auf der Basis eines hochwärmebeständigen Polyamides oder anderer hochwärmebeständiger thermoplastischer Kunststoffe, beispielsweise Polyacryletherketone (PEAK). Alternativ kommen aus dem Bereich der Polyamide vorzugsweise Polyamid 46 (PA46) oder teilaromatische Polyamide, vorzugsweise Polyphthalamid (PPA) oder Poly-Hexamethylen-Therephthalmid (PA6T) bzw. Copolymere, Poly-Hexamethylen-Isophthalamid (PA6T/61) und /oder Poly-Hexamethylen-Adipinamid (PA6T/61/66) oder Poly-Methylpentamethylen-Terephthalamid (PA6T/MPMDT) mit reibungs- und verschleißmindernden sowie festigkeitssteigernden Zuschlagstoffen in Betracht. Als geeignete Zuschlagsstoffe sind Kohlenstofffasern und / oder Aramidfasern in einem Gewichtsanteil von 1 bis 40%, vorzugsweise Kohlenstofffasern mit einem Gewichtsanteil von 20 bis 30%, Aramidfasern mit einem Gewichtsanteil von 1 bis 15% sowie Festschmierstoffe wie Molybdändisulfid mit einem Gewichtsanteil von 1 bis 5% , zusammen mit oder alternativ Graphit in einem Gewichtsanteil von 1 bis 10%, zusammen mit oder alternativ Polytetrafluorethylen (PTFE) in einem Gewichtsanteil von 1 bis 30%, vorzugsweise einem PTFE-Anteil von 5 bis 15 Gewichts- %, zusammen mit oder alternativ Polyphenylensulfon (PPSo2, Ceramer) in einem Gewichtsanteil von 1 bis 30%, vorzugsweise 1 bis 15 Gewichts- % zu wählen.

### Kurze Beschreibung der Zeichnungen

Die Erfindung wird nachfolgend anhand von Ausführungsbeispielen näher erläutert. Es zeigen:
- Figur 1: Ein Kupplungsausrücklager mit einer Anlaufscheibe aus Kunststoff für eine Kupplung mit Tellerfeder, in einem Längsschnitt entlang der Rotationsachse des Kupplungsausrücklagers
- Figur 2: das Detail Z vom Kupplungsausrücklager nach Figur 1, in einer stark vergrößerten und nicht maßstäblichen Darstellung, aus der die formschlüssige Verbindung zwischen dem Flansch des Innenrings mit der Anlaufscheibe ersichtlich ist
- Figur 3: eine Schnittdarstellung eines Details des Kupplungsausrücklagers nach Figur 1, entlang der Linie III-III in Figur 2 oder Figur 4, quer zur Rotationsachse geschnitten,
- Figur 4: das Detail Z nach Figur 2, jedoch mit einer Anlaufscheibe, die im Vergleich zu der in Figur 2 dargestellten Anlaufscheibe modifiziert ist,
- Figur 5: das Detail Z nach Figur 2, jedoch mit einer weiteren Anlaufscheibe, die im Vergleich zu der in Figur 2 dargestellten Anlaufscheibe modifiziert ist,
- Figur 6: das Detail Z nach Figur 2, jedoch mit einer anderen Anlaufscheibe und mit einer anderen Verbindung zwischen einer Anlaufscheibe und einem Flansch,
- Figur 7: eine Schnittdarstellung eines Details der Verbindung nach Figur 6, entlang der Linie VII-VII, quer zur Rotationsachse geschnitten und
- Figur 8: eine Schnittdarstellung eines Kupplungsausrücklagers mit einem Einstellring und einer Verbindung zwischen eine Anlaufscheibe und dem Flansch des Einstellrings, im Längsschnitt entlang der Rotationsachse des Kupplungsausrücklagers.

### Detaillierte Beschreibung der Zeichnung

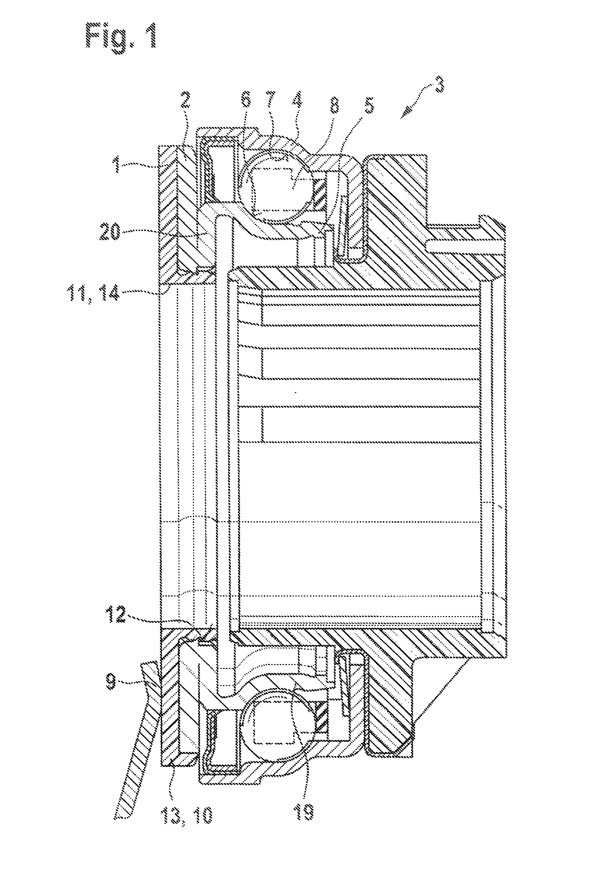

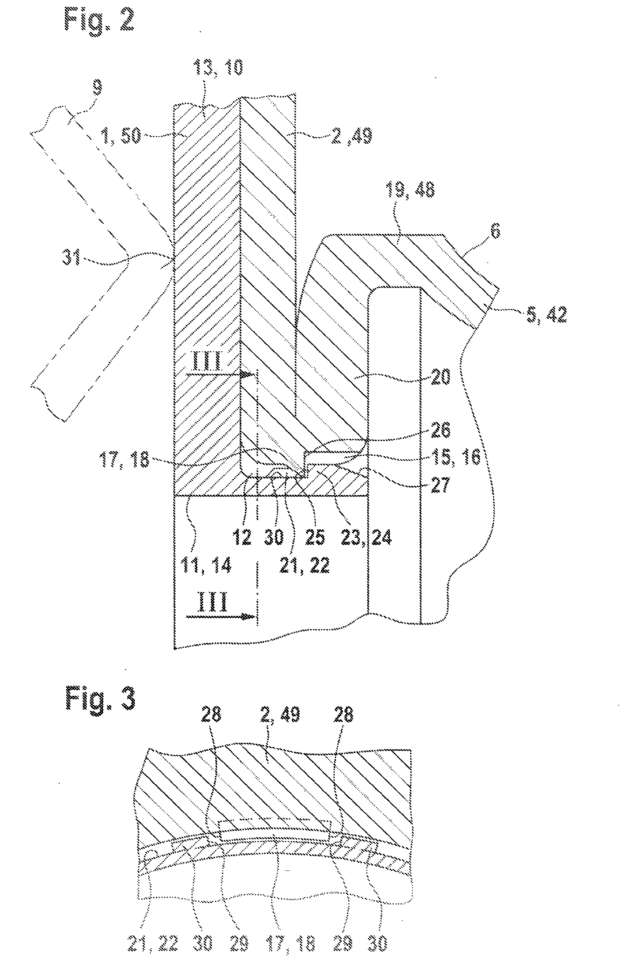

Die Figuren 1 und 2 zeigen Details einer Verbindung zwischen einer Anlaufscheibe 1 und einem Flansch 2 eines Kupplungsausrücklages 3. Das Kupplungsausrücklager 3 ist mit einem nicht umlaufenden Außenring 4 und mit einem bei Betrieb des Kupplungsausrücklagers 3 umlaufenden Innenring 5 versehen. Der Außenring 4 und der Innenring 5 weisen Laufbahnen 6 und 7 für Wälzkörper 8 auf.

Der Innenring 5 ist ein kalt aus Blech geformtes Bauteil und weist einen rohrförmigen Abschnitt 19 mit der Laufbahn 6 auf. Das Blech des Innenrings 5 ist von dem rohrförmigen Abschnitt 19 radial nach innen zu einem scheibenförmigen Abschnitt 20 abgewinkelt und geht dann in die ansonsten innenzylindrisch ausgebildete Durchgangsöffnung 12 über. Im weiteren Verlauf ist das Blech des Innenrings 5 radial nach außen zur Bildung des Flanschs 2 abgewinkelt, so dass der Flansch 2 radial über den rohrförmigen Abschnitt 19 hinausragt, und liegt an dem scheibenförmigen Abschnitt 20 axial zumindest teilweise an. Die so gebildete axiale Dopplung des Blechs verstärkt den Flansch 2 und schafft die axial ausreichend breite Basis für die innenzylindrische Durchgangsöffnung 12.

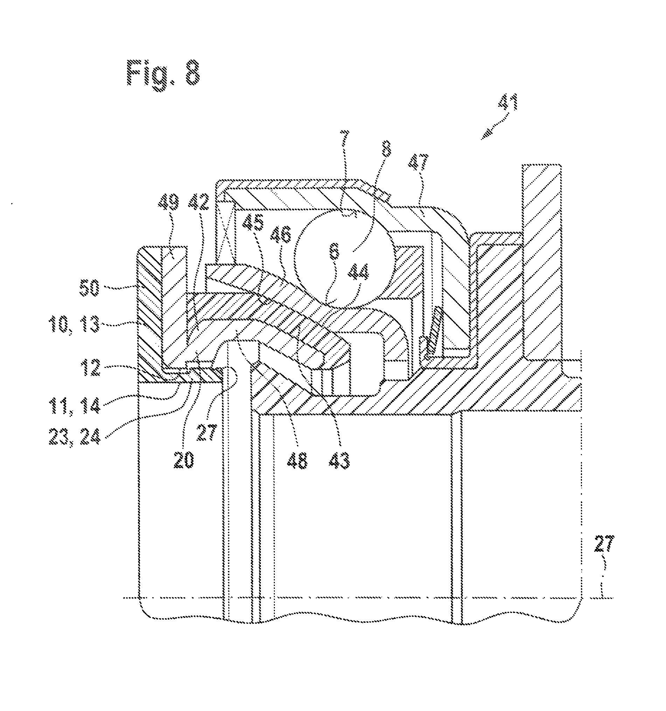

Figur 8 zeigt ein Kupplungsausrücklager 41 mit einem Einstellring 42. Das Kupplungsausrücklager 41 ist mit einem nicht umlaufenden Außenring 47 und mit einem bei Betrieb des Kupplungsausrücklagers 41 umlaufenden Innenring 46 versehen. Der Außenring 47 und der Innenring 46 weisen Laufbahnen 6 und 7 für Wälzkörper 8 auf. Der Einstellring 42 weist einen rohrförmigen Abschnitt 48 aus Blech auf, der selbst außen und auch an einer Beschichtung 43 mit Gleitwerkstoff außen eine kalottenartige konvexe Kontur 44 aufweist. Die kalottenartige Kontur 44 korrespondiert mit einer innen kalottenartig konkav ausgebildeten Kontur 45 an dem Innenring 46 so, dass der Einstellring 42 relativ zu dem Innenring 46 und zur Rotationsachse 27 des Kupplungsausrücklagers 41 schwenkbeweglich an dem Innenring 46 abgestützt ist.

Der Einstellring 42 ist ein kalt aus Blech geformtes Bauteil. Das Blech des Innenrings 46 ist von dem rohrförmigen Abschnitt 48 radial nach innen zu einem scheibenförmigen Abschnitt 20 abgewinkelt und geht dann in die ansonsten innenzylindrisch ausgebildete Durchgangsöffnung 12 über. Im weiteren Verlauf ist das Blech des Einstellrings 42 radial nach außen zur Bildung des Flanschs 49 abgewinkelt, so dass der Flansch 49 radial über den rohrförmigen Abschnitt 48 hinausragt und liegt an dem scheibenförmigen Abschnitt 20 axial zumindest teilweise an. Die so gebildete axiale Dopplung des Blechs verstärkt den Flansch 49 und schafft die axial ausreichend breite Basis für die innenzylindrische Durchgangsöffnung 12.

Figur 2 zeigt eine nicht maßstäbliche und vergrößerte Darstellung der Einzelheit Z aus den Figuren 1 und 8. Die innenzylindrischen Oberfläche der Durchgangsöffnung 12 ist von ersten radialen Abweichungen 15 in Form von radialen Vertiefungen 16 in der Oberfläche unterbrochen. Diese Vertiefungen 16 entstehen beim Umformprozess des Innenringes 5 bzw. des Einstellrings 42 durch Prägen und lassen sich deshalb mit hoher Maßhaltigkeit und Reproduzierbarkeit erzielen. Den Vertiefungen 16 schließen sich umfangsseitig bzw. tangential weitere erste radiale Abweichungen 17 an der Oberfläche der Durchgangsöffnung 12 an. Die weiteren ersten radialen Abweichungen 17 sind z.B. aus dem Material, das axial plastisch verdrängt wurde um die Vertiefungen 16 herzustellen und sind Längsschnitt nasenartig ausgebildete sowie radial nach innen gerichtete Vorsprünge 18. Von den Vorsprüngen 18 bzw. Vertiefungen 16 sind zwei oder mehr am Umfang in der Durchgangsöffnung 12 verteilt. Der Übergang von der jeweiligen Vertiefung 16 zum axial folgenden Vorsprung 18 ist ein Hinterschnitt 26, der axial hintergriffen werden kann.

An der axial planen und kreisringförmig ausgebildeten Kontaktfläche 31 der im Längsschnitt L-förmig gestalteten Anlaufscheiben 1 bzw. 50 aus Kunststoff liegen Federenden 9 einer ansonsten nicht dargestellten Kupplungsfeder an. Die Anlaufscheiben 1 und 50 weisen jeweils einen scheibenförmigen Abschnitt 13 auf, der durch den Längsschnitt nach Figur 1, 2 und 8 als erster Schenkel 10 sichtbar ist. Der erste Schenkel 10 bzw. der scheibenförmige Abschnitt 13 stützt sich axial an dem Flansch 2 bzw. 49 ab. Rechtwinklig von dem scheibenförmig ausgebildeten Abschnitt 13 geht ein rohrförmiger Abschnitt 14 ab, der in Figur 1, 2 und 8 durch den Längsschnitt als zweiter Schenkel 11 abgebildet ist. Der rohrförmige Abschnitt 14 taucht axial in die zentrale Durchgangsöffnung 12 des Flansches 1 bzw. 49 ein und liegt innenumfangsseitig der Durchgangsöffnung 12 radial zumindest partiell an.

Die radial nach außen weisende Oberfläche des zweiten Schenkels 11 weist eine zweite radiale Abweichung 21 in Form einer Umfangsnut 22 und eine weitere zweite radiale Abweichung 23 in Form eines Schnappwulstes 24 auf, die auch alternativ durch Schnappnasen gebildet ist. Der Schnappwulst 24 und die Umfangsnut 22 bilden den Hinterschnitt 25, die axial hintergriffen werden können und für einen Formschluss mit den ersten radialen Abweichungen 15 und 17 der Durchgangsöffnung 12 vorgesehen sind.

Die radialen Abweichungen 15, 17, 21 und 23 korrespondieren wie nachfolgend beschrieben miteinander. Bei der Montage der Anlaufscheibe 1 bzw. 50 wird der rohrförmige Abschnitt 14 zunächst an der Fase 27 zentriert und gibt an dem Schnappwulst 24 radial solange nach, bis der rohrförmige Abschnitt 14 in die zentrale Durchgangsöffnung 12 des Flansches 1 eintaucht. Der Schnappwulst 24 schnappt dann radial in die radialen Vertiefungen 16 ein und federt somit radial auf. Zeitgleich mit tauchen die radialen Vorsprünge 18 in die Umfangsnut 22 ein. Eine lösbare oder unlösbare Schnappverbindung ist hergestellt. Axiales Verlieren ist somit durch das Hintergreifen des jeweiligen Hinterschnittes 25 bzw. 26 durch eines der Formschlusselemente 18 bzw. 24 verhindert, die dabei mit dem am Flansch 2 axial abgestützten ersten Schenkel 10 zusammenwirken.

Die Verbindung zwischen der Anlaufscheibe 1 bzw. 50 und dem Flansch 2 bzw. 50 ist alternativ zu vorher beschriebener Schnappverbindung eine nicht lösbare formschlüssige Verbindung. Dazu weist der rohrförmige Abschnitt 14 zunächst keine Umfangsnut 22 und keinen Schnappwulst 24 sondern nur die Fase 27 auf. Der Abschnitt 14 wird in die Durchgangsöffnung eingepresst oder eingeführt. Im Anschluss wird der rohrförmige Abschnitt 14 von innen radial soweit aufgeweitet, das Material des rohrförmigen Abschnitts 14 in die radialen Vertiefungen 16 bleibend verdrängt wird. Beim Aufweiten formen sich auch die radialen Vorsprünge 18 aus Metall in den Kunststoff des Abschnitts 14 ein, so dass schließlich die Nut 22 oder radiale Vertiefungen im Abschnitt 14 sowie die radiale Erhöhung 24 aus dem Abschnitt zu der formschlüssigen Verbindung an den Hinterschnitten 25 und 26 geformt ist.

Die Anlaufscheibe 1 bzw. 50 und der Flansch 2 bzw. 49 sind nicht nur axial aneinander sondern auch gegen relatives Verdrehen zueinander um die Rotationsachse 27 aneinander gesichert. Dazu sind, wie in Figur 3 dargestellt ist, die weiteren ersten radialen Abweichungen 17, d.h. die Vorsprünge 18, seitlich in Umfangsrichtung durch tangential oder in Umfangsrichtung gerichtete Flanken 28 begrenzt. Jeder der Flanken 28 liegt eine Flanke 29 eines Verdrehanschlags 30 gegenüber oder liegt an dieser im Formschluss direkt an. Die Verdrehanschläge 30 stehen aus dem Grund der Umfangsnut 22 radial nach außen hervor.

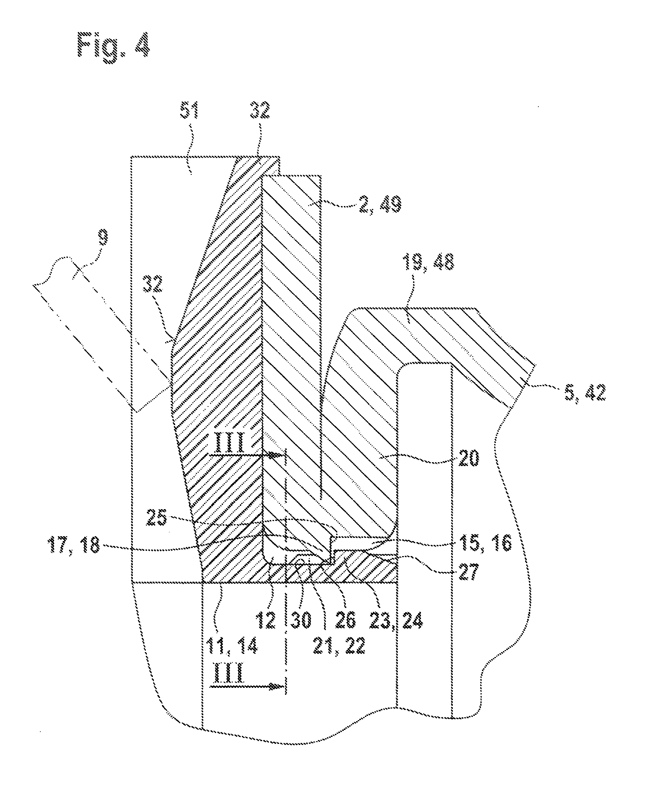

Figur 4 zeigt das Detail Z nach Figur 2, jedoch mit einer Anlaufscheibe 32, deren Kontaktfläche 32a für den Kontakt mit gerade ausgebildeten Federenden 9 im Vergleich zu der in Figur 2 dargestellten Anlaufscheibe 1 nicht axial plan sondern in beliebigen Längsschnitten, wie zum Beispiel in dem betrachteten axial - konvex - ballig ausgeführt ist und jedoch in tangentiale Richtung aus beliebig vielen zueinander benachbarten parallelen Geraden gebildet ist, die in der Ansicht nach Figur 4 die konvexe Linie der Kontaktfläche 32a abbilden. Die gerade ausgebildeten Federenden greifen außerdem in axiale Ausnehmungen 51 an der Anlaufscheibe 32 ein, so dass die Anlaufscheibe und die Federenden 9 in Umfangsrichtung gegen Schlupf formschlüssig aneinander gesichert sind. Die in Figur 4 ansonsten dargestellte Verbindung und deren Elemente sind von gleicher Gestalt und Ausführung wie die des Ausführungsbeispiels nach den Figuren 2 und 3.

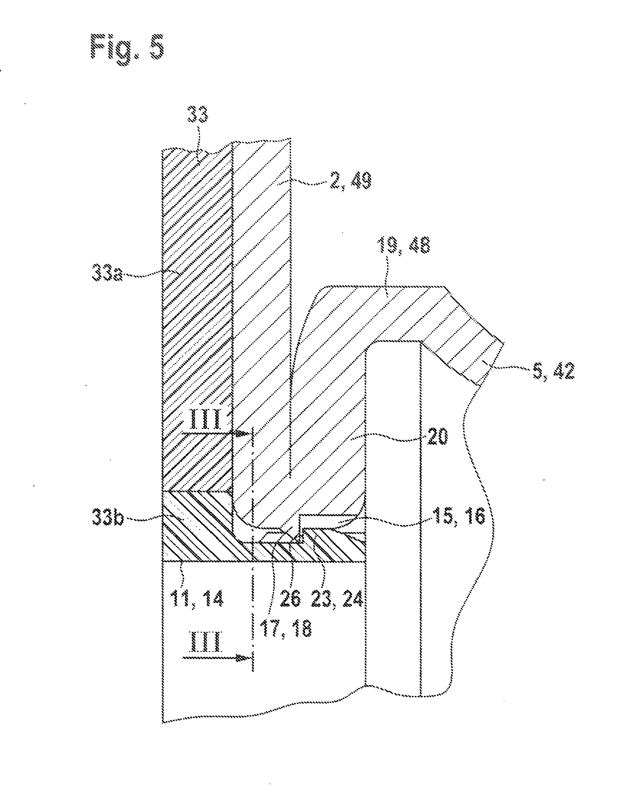

Figur 5 zeigt das Detail Z nach Figur 2, jedoch mit einer Anlaufscheibe 33 die aus mindestens zwei Komponenten 33a und 33b zusammengesetzt ist. Die Verbindung und deren Elemente sind von gleicher Gestalt und Ausführung wie die des Ausführungsbeispiels nach den Figuren 2 und 3. Eine derartige Mehrkomponentenausbildung ist insbesondere dann hilfreich, wenn an das Material in der Kontaktzone mit den Federenden 9 Anforderungen gestellt sind als als die Anforderungen an das Material in einer eine Schnapp- bzw. Pressverbindung zwischen Anlaufscheibe 33 und Flansch 2 bzw. 49 und sich die Anforderungen nicht in einem gemeinsamen Werkstoff realisieren lassen. So wird zum Beispiel die hoch verschleißgefährdete Komponente 33a aus einem Werkstoff mit hoher Verschleißbeständigkeit und mit guten Gleiteigenschaften, zum Beispiel aus Polyamid PA46, ausgeführt. Die Komponente 33b wird für eine elastische Verbindung mit dem Flansch aus zäh-elastischem Kunststoff, zum Beispiel aus Polyamid PA66 ausgeführt.

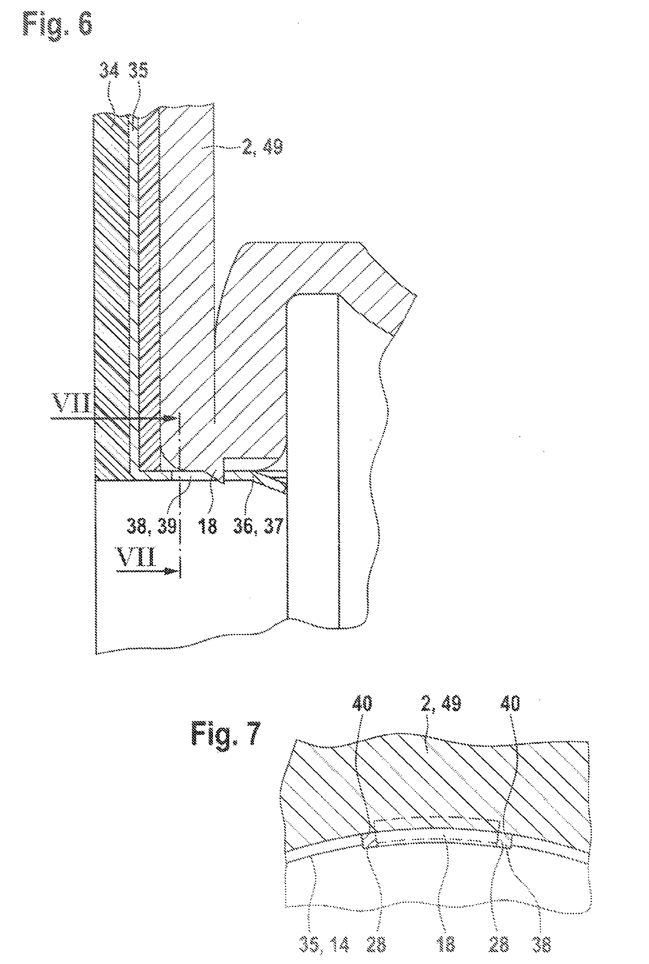

Figur 6 zeigt eine armierte Anlaufscheibe 34 aus Kunststoff. Die Armierung 35 ist ein abgewinkeltes Blechbauteil. Die Armierung 35 weist entweder axial ausgerichteten zweiten Schenkel 36 oder einen hohlzylindrischen Abschnitt 37, der in der Darstellung somit auch als zweiter Schenkel 36 erscheint, auf, der zur Herstellung der Verbindung in die Durchgangsöffnung 12 axial eintaucht. An dem hohlzylindrischen Abschnitt 37 sind radial durchgehende Fenster 38 ausgearbeitet, die in diesem Fall die zweiten radialen Abweichungen 39 sind. In ein Fenster 38 von jeweils mindestens zwei am Umfang verteilten der Fenster 38 greift jeweils einer der radialen Vorsprünge 18 des Flansches 2 formschlüssig ein.

Die Anlaufscheibe 34 und der Flansch 2 sind nicht nur axial aneinander sondern auch gegen relatives Verdrehen zueinander um die Rotationsachse 27 aneinander gesichert. Dazu sind, wie in Figur 7 dargestellt und wie schon vorher erwähnt ist, die weiteren ersten radialen Abweichungen 17, d.h. die Vorsprünge 18, seitlich in Umfangsrichtung durch tangential oder in Umfangsrichtung gerichtete Flanken 28 begrenzt. Jeder der Flanken 28 liegt eine Flanke 40 gegenüber, die durch die in Umfangsrichtung gewandte Innenkanten des Fensters 38 gebildet sind.

### Bezugszeichen

- 1: Anlaufscheibe
- 2: Flansch
- 3: Kupplungsausrücklager
- 4: Außenring
- 5: Innenring
- 6: Laufbahn
- 7: Laufbahn
- 8: Wälzkörper
- 9: Federende
- 10: erster Schenkel
- 11: zweiter Schenkel
- 12: zentrale Durchgangsöffnung
- 13: scheibenförmiger Abschnitt
- 14: rohrförmiger Abschnitt der An-laufscheibe
- 15: erste radiale Abweichung
- 16: Vertiefung
- 17: weitere erste radiale Abweichung
- 18: Vorsprung
- 19: rohrförmiger Abschnitt des Innenrings
- 20: scheibenförmiger Abschnitt
- 21: zweite radiale Abweichung
- 22: Umfangsnut
- 23: zweite radiale Abweichung
- 24: Schnappwulst
- 25: Hinterschnitt
- 26: Hinterschnitt
- 27: Rotationsachse
- 28: Flanke
- 29: Flanke
- 30: Verdrehanschlag
- 31: Kontaktfläche
- 32: Anlaufscheibe
- 32a: Kontaktfläche
- 33: Anlaufscheibe
- 33a: Komponente
- 33b: Komponente
- 34: Anlaufscheibe
- 35: Armierung
- 36: zweiter Schenkel
- 37: hohlzylindrischer Abschnitt
- 38: Fenster
- 39: zweite radiale Abweichungen
- 40: Flanke
- 41: Kupplungsausrücklager
- 42: Einstellring
- 43: Beschichtung
- 44: konvexe Kontur
- 45: konkave Kontur
- 46: Innenring
- 47: Außenring
- 48: rohrförmiger Abschnitt
- 49: Flansch
- 50: Anlaufscheibe
- 51: axiale Ausnehmungen

## Patentansprüche

1. Kupplungsausrücklager (3, 41) mit einem nicht umlaufenden Außenring (4, 47) und mit einem umlaufenden Innenring (5, 46), wobei der Außenring (4, 47) und der Innenring (5, 46) Laufbahnen (6, 7) für Wälzkörper (8) aufweisen, das Kupplungsausrücklager (3, 41) weiter mit einer im Längsschnitt L-förmig gestalteten Anlaufscheibe (1, 32, 33, 34, 50) für den Anlauf von Kupplungsfederenden (9), wobei die Anlaufscheibe (1, 32, 33, 34, 50) im Längsschnitt einen ersten Schenkel (10) aufweist, der sich axial an einem Flansch (2, 49) abstützt und wobei die Anlaufscheibe (1, 32, 33, 34, 50) einen im Längsschnitt im Winkel von dem ersten Schenkel (10) abgehenden zweiten Schenkel (11, 36) aufweist, der axial in eine zentrale Durchgangsöffnung (12) des Flansches (2, 49) eintaucht und dabei innenumfangsseitig der Durchgangsöffnung (12) radial anliegt, *und wobei* die Oberfläche der Durchgangsöffnung (12) innen erste radiale Abweichungen (15, 17) aufweist, die mit zweiten radialen Abweichungen (21, 23, 39) an dem zweiten Schenkel (11, 36) formschlüssig korrespondieren, ***dadurch gekennzeichnet, dass** zumindest ein Teil der radialen Abweichungen (15) umfangsseitig begrenzt ist und so wenigstens zwischen den umfangsseitig begrenzten Abweichungen der Anlaufscheibe (1, 32, 33, 34, 50) und dem Flansch (2, 49) in der Durchgangsöffnung (12) eine um die Rotationsachse (27) des Kupplungsausrücklagers (3, 41) verdrehsichere formschlüssige Verbindung zwischen dem zweiten Schenkel (11, 36) und dem Flansch (2, 49) ausgebildet ist.*

2. Kupplungsausrücklager nach Anspruch 1, **dadurch gekennzeichnet, dass** die ersten radialen Abweichungen (15) radiale Vertiefungen (16) der Oberfläche der Durchgangsöffnung (12) und die zweiten radialen Abweichungen (23) radiale Vorsprünge (24) sind, wobei die Vorsprünge (24) in die Vertiefungen (16) eingreifen.

3. Kupplungsausrücklager nach Anspruch 1, **dadurch gekennzeichnet, dass** die Abweichungen (21, 23, 39) der Anlaufscheibe (1, 32, 33, 34, 50) mit den des Flansches (15, 17) axial formschlüssig lösbar miteinander korrespondieren.

4. Kupplungsausrücklager nach Anspruch 1, **dadurch gekennzeichnet, dass** zwischen dem Flansch (2, 49) und dem zweiten Schenkel (11, 36) eine Schnappverbindung in der Durchgangsöffnung (12) ausgebildet ist.

5. Kupplungsausrücklager nach Anspruch 1, **dadurch gekennzeichnet, dass** die Schenkel (10, 11) der Anlaufscheibe aus Kunststoff sind.

6. Kupplungsausrücklager nach Anspruch 1, **dadurch gekennzeichnet, dass** der erste Schenkel (10) aus Kunststoff und der zweite Schenkel (36) aus Blech ist, wobei das Blech in dem Kunststoff des ersten Schenkels (10) verankert ist.

7. Kupplungsausrücklager nach Anspruch 1, **dadurch gekennzeichnet, dass** der Flansch (2, 49) aus Blech von einem rohrförmigen Abschnitt (19,48) ausgeht.

8. Kupplungsausrücklager nach Anspruch 7, **dadurch gekennzeichnet, dass** der Flansch (2, 49) von dem rohrförmigen Abschnitt (19,48) aus zunächst radial nach innen verläuft und dann der Flansch (2, 49) im weiteren Verlauf radial nach außen umgelegt ist und nach außen gerichtet verläuft, so dass der Flansch (2, 49) radial über den rohrförmigen Abschnitt (19, 48) hinausragt.

9. Kupplungsausrücklager nach Anspruch 1, **dadurch gekennzeichnet, dass** der Flansch (2, 49) aus dem Blech ist, wobei der Flansch (2, 49) von einem rohrförmigen Abschnitt (19, 48) aus bis hin zur Durchgangsöffnung zumindest abschnittweise eine Dopplung des Blechs aufweist, wobei an der Doppelung zwei Abschnitte des Blechs axial aneinander liegen.

10. Kupplungsausrücklager nach Anspruch 7, **dadurch gekennzeichnet, dass** der rohrförmige Abschnitt (19) die Laufbahn (6) des Innenrings (5) aufweist.

11. Kupplungsausrücklager nach Anspruch 7, **dadurch gekennzeichnet, dass** der rohrförmige Abschnitt (48) einen Einstellring (42) *bildet* mit zumindest außen einer kalottenartige Kontur (44) und mit einer innen kalottenartig ausgebildeten Kontur (45) an dem Innenring (46) so korrespondiert, dass der Einstellring (42) relativ zu dem Innenring (46) und zur Rotationsachse (27) des Kupplungsausrücklagers (41) schwenkbeweglich an dem Innenring abgestützt ist.

12. Kupplungsausrücklager nach Anspruch 1, **dadurch gekennzeichnet, dass** der Flansch (2) einteilig mit dem Innenring (5) ausgebildet ist.

## Claims

1. Clutch release bearing (3, 41) having a non-encircling outer ring (4, 47) and having an encircling inner ring (5, 46), wherein the outer ring (4, 47) and the inner ring (5, 46) have raceways (6, 7) for rolling bodies (8), the clutch release bearing (3, 41) furthermore having a thrust plate (1, 32, 33, 34, 50), which is of L-shaped form in longitudinal section, for the exertion of thrust by clutch spring ends (9), wherein the thrust plate (1, 32, 33, 34, 50) has, in longitudinal section, a first leg (10) which is supported axially on a flange (2, 49), and wherein the thrust plate (1, 32, 33, 34, 50) has a second leg (11, 36) which extends, in longitudinal section, at an angle from the first leg (10) and which protrudes axially into a central passage opening (12) of the flange (2, 49) and, in so doing, bears radially against the inner circumference of the passage opening (12), and wherein the surface of the passage opening (12) has, on the inside, first radial deviations (15, 17) which correspond in a form-fitting manner to second radial deviations (21, 23, 39) on the second leg (11, 36), **characterized in that** at least a part of the radial deviations (15) is circumferentially delimited and thus, between at least the circumferentially delimited deviations of the thrust plate (1, 32, 33, 34, 50) and the flange (2, 49), there is formed in the passage opening (12) a positively locking connection, which is twist-proof about the axis of rotation (27) of the clutch release bearing (3, 41), between the second leg (11, 36) and the flange (2, 49).

2. Clutch release bearing according to Claim 1, **characterized in that** the first radial deviations (15) are radial depressions (16) in the surface of the passage opening (12) and the second radial deviations (23) are radial projections (24), wherein the projections (24) engage into the depressions (16).

3. Clutch release bearing according to Claim 1, **characterized in that** the deviations (21, 23, 39) of the thrust plate (1, 32, 33, 34, 50) and those of the flange (15, 17) correspond to one another in an axially form-fitting, detachable manner.

4. Clutch release bearing according to Claim 1, **characterized in that** there is formed in the passage opening (12) a snap-action connection between the flange (2, 49) and the second leg (11, 36).

5. Clutch release bearing according to Claim 1, **characterized in that** the legs (10, 11) of the thrust plate are formed from plastic.

6. Clutch release bearing according to Claim 1, **characterized in that** the first leg (10) is composed of plastic and the second leg (36) is composed of sheet metal, wherein the sheet metal is anchored in the plastic of the first leg (10).

7. Clutch release bearing according to Claim 1, **characterized in that** the flange (2, 49) composed of sheet metal projects from a tubular portion (19, 48).

8. Clutch release bearing according to Claim 7, **characterized in that** the flange (2, 49) initially runs radially inward proceeding from the tubular portion (19, 48) and then the flange (2, 49), over its further profile, is folded radially outward and runs in an outward direction, such that the flange (2, 49) projects radially beyond the tubular portion (19, 48).

9. Clutch release bearing according to Claim 1, **characterized in that** the flange (2, 49) is formed from the sheet metal, wherein the flange (2, 49) has, proceeding from a tubular portion (19, 48) toward the passage opening, a doubling-up of the sheet metal at least in sections, wherein, at the doubling-up, two portions of the sheet metal bear axially against one another.

10. Clutch release bearing according to Claim 7, **characterized in that** the tubular portion (19) has the raceway (6) of the inner ring (5).

11. Clutch release bearing according to Claim 7, **characterized in that** the tubular portion (48) forms an adjusting ring (42) having, at least on the outside, a spherical-cap-like contour (44) and corresponds with an inwardly spherical-cap-like contour (45) on the inner ring (46) such that the adjusting ring (42) is supported on the inner ring so as to be pivotally movable relative to the inner ring (46) and relative to the axis of rotation (27) of the clutch release bearing (41).

12. Clutch release bearing according to Claim 1, **characterized in that** the flange (2) is formed in one piece with the inner ring (5).

## Revendications

1. Butée de débrayage (3, 41) comportant une bague extérieure non rotative (4, 47) et une bague intérieure rotative (5, 46), dans laquelle la bague extérieure (4, 47) et la bague intérieure (5, 46) présentent des pistes de roulement (6, 7) pour des corps de roulement (8), la butée de débrayage (3, 41) est en outre pourvue d'une rondelle de butée (1, 32, 33, 34, 50) configurée en forme de L en coupe longitudinale pour la butée d'extrémités de ressort d'embrayage (9), dans laquelle la rondelle de butée (1, 32, 33, 34, 50) présente en coupe longitudinale une première branche (10) qui s'appuie axialement sur une bride (2, 49) et dans laquelle la rondelle de butée (1, 32, 33, 34, 50) présente en coupe longitudinale une deuxième branche (11, 36) partant angulairement de la première branche (10), qui plonge axialement dans une ouverture de passage centrale (12) de la bride (2, 49) et s'applique en l'occurrence radialement du côté de la périphérie intérieure de l'ouverture de passage (12), et dans laquelle la surface de l'ouverture de passage (12) présente intérieurement des premières déviations radiales (15, 17) qui correspondent en complémentarité de forme à des deuxièmes déviations radiales (21, 23, 39) sur la deuxième branche (11, 36), **caractérisée en ce qu'**au moins une partie des déviations radiales (15) est limitée du côté de la périphérie et un assemblage en complémentarité de forme, bloqué en rotation autour de l'axe de rotation (27) de la butée de débrayage (3, 41), est ainsi formé entre la deuxième branche (11, 36) et la bride (2, 49) au moins entre les déviations de la rondelle de butée (1, 32, 33, 34, 50) limitées du côté de la périphérie et la bride (2, 49) dans l'ouverture de passage (12).

2. Butée de débrayage selon la revendication 1, **caractérisée en ce que** les premières déviations radiales (15) sont des creux radiaux (16) de la surface de l'ouverture de passage (12) et les deuxièmes déviations radiales (23) sont des saillies radiales (24), dans laquelle les saillies (24) s'engagent dans les creux (16).

3. Butée de débrayage selon la revendication 1, **caractérisée en ce que** les déviations (21, 23, 39) de la rondelle de butée (1, 32, 33, 34, 50) correspondent les unes aux autres de façon séparable, en complémentarité de forme axialement avec celles de la bride (15, 17).

4. Butée de débrayage selon la revendication 1, **caractérisée en ce qu'**un assemblage à encliquetage est réalisé dans l'ouverture de passage (12) entre la bride (2, 49) et la deuxième branche (11, 36).

5. Butée de débrayage selon la revendication 1, **caractérisée en ce que** les branches (10, 11) de la rondelle de butée sont en matière plastique.

6. Butée de débrayage selon la revendication 1, **caractérisée en ce que** la première branche (10) est en matière plastique et la deuxième branche (36) est en tôle, dans laquelle la tôle est ancrée dans la matière plastique de la première branche (10).

7. Butée de débrayage selon la revendication 1, **caractérisée en ce que** la bride (2, 49) en tôle part d'une partie tubulaire (19, 48).

8. Butée de débrayage selon la revendication 7, **caractérisée en ce que** la bride (2, 49) s'étend d'abord radialement vers l'intérieur à partir de la partie tubulaire (19, 48) et ensuite la bride (2, 49) est rabattue dans son tracé ultérieur radialement vers l'extérieur et est orientée vers l'extérieur, de telle manière que la bride (2, 49) s'étende radialement au-delà de la partie tubulaire (19, 48).

9. Butée de débrayage selon la revendication 1, **caractérisée en ce que** la bride (2, 49) est en tôle, dans laquelle la bride (2, 49) présente au moins partiellement un doublage de la tôle depuis une partie tubulaire (19, 48) jusqu'à l'ouverture de passage, dans laquelle deux parties de la tôle s'appliquent axialement l'une contre l'autre dans le doublage.

10. Butée de débrayage selon la revendication 7, **caractérisée en ce que** la partie tubulaire (19) présente la piste de roulement (6) de la bague intérieure (5).

11. Butée de débrayage selon la revendication 7, **caractérisée en ce que** la partie tubulaire (48) forme une bague de réglage (42) avec au moins extérieurement un contour en forme de calotte (44) et correspond avec un contour en forme de calotte réalisé intérieurement (45) sur la bague intérieure (46), de telle manière que la bague de réglage (42) soit appuyée sur la bague intérieure de façon pivotante par rapport à la bague intérieure (46) et par rapport à l'axe de rotation (27) de la butée de débrayage (41).

12. Butée de débrayage selon la revendication 1, **caractérisée en ce que** la bride (2) est réalisée d'une seule pièce avec la bague intérieure (5).
